# EUROPEAN PATENT SPECIFICATION

(11) **EP 3 927 513 B1**
(45) Date of publication and mention of the grant of the patent: **07.06.2023**
(21) Application number: 20710994.3
(22) Date of filing: 19.02.2020
(51) Int. Cl.: B28D 1/00, B28B 11/04, B28D 7/04

(54) **RESINING PLANT FOR SLABS OF STONE MATERIAL AND METHOD FOR RESINING SLABS OF STONE MATERIAL**
VERHARZUNGSANLAGE FÜR PLATTEN AUS STEINMATERIAL UND VERFAHREN ZUR VERHARZUNG VON PLATTEN AUS STEINMATERIAL
USINE DE RÉSINAGE DE DALLES EN MATÉRIAU PIERREUX ET MÉTHODE DE RÉSINAGE DE TELLES DALLES

(30) Priority: 20.02.2019 IT 201900002483
(43) Date of publication of application: 29.12.2021
(73) Proprietor: Prometec S.r.l., 54100 Massa (MS) (IT)
(72) Inventor: NOE', Alessio, 54038 Montignoso (MS) (IT)
(74) Representative: Mannucci, Michele
(86) International application number: PCT/IB2020/051366
(87) International publication number: WO 2020/170144

(56) References cited:
- EP-A2- 2 724 999
- WO-A1-2007/054995
- WO-A1-2018/073776
- WO-A1-2018/215898
- ES-A1- 2 228 263

## Description

### Technical field

The present invention relates to production industry of slabs of stone material, and more particularly relates to a resining plant for slabs of stone material and a method for resining slabs of stone material.

### Background art

Natural building stone materials, such as marble, granite, and stone, must be treated in most cases with mono- or bi-component epoxy resins in order to be chemically and mechanically reinforced or simply to have a better aesthetic appearance. The resins enter the cracks of the slabs, reinforcing them and giving a homogeneous surface effect.

In general, the resining operation is obtained with process lines that, in addition to the necessary handling of loading and unloading, provide for:
- a slab drying cycle on temperature-ventilated ovens,
- one or more application cycles of epoxy resin,
- a catalysis cycle in temperature ovens.

The resin application cycle can be done manually by the operator or carried out automatically or semi-automatically by means of a numerically controlled resin distribution device. Sometimes an automatic machine with two controlled axes is used to apply the resins, which, after reading the outline of the slab, sprays the resin on the surface through a pump-nuzzle system. In other cases, an automated roller manipulator/distributor may be used.

Regarding the catalysis step, this is carried out in an oven placed on the production line. The slab, once resined, is moved within a small vacuum oven. The vacuum allows the resin to penetrate deep into the slab, increasing the resining quality. In this oven, the slab is stationary for a period that is a function of the time required for catalysis, mediated by the line production times.

In general, in fact, the slab stationing time in the oven affects the line production times. The longer the stationing time, the better the catalysis step (the greater the depth of impregnation of the slab by the resin, the greater the certainty that all the resin catalyzed). However, on the contrary the longer the stationing time in the oven, the lower the line productivity

Document WO 2007/054995 A1 discloses a resining plant for stone slabs which provides the movement of block supports comprising, in succession, a station for loading blocks on respective said supports, a resining station on which a catalyzable resin can be applied on at least one face of a respective block, a sealing closure station for a chamber associated with said support, a catalysis oven station wherein said support 5 is present with said resined block within the respective chamber sealed and placed under vacuum, an unloading station for said blocks from said support, moving means for said plurality of supports with said slabs through said stations, said supports comprising each a support frame of the block, a sealed chamber associated with said frame, which can be opened and closed, suitable for surrounding the blocks supported by the frame, at least one conduit suitable for putting into operating communication the interior of said chamber with an area of extraction of air from outside said chamber, to allow the vacuum to be formed within the chamber.

Document ES 2 228 263 A1 discloses a method for resining stone slabs, comprising arranging a stone slab on a movable support, applying a resin on at least one face of said slab, enclosing said slab on said support inside a sealing-type chamber, when closed, moving said support with said sealed chamber containing said slab, placing said support with said closed seal chamber containing said slab, creating the vacuum within said sealed chamber, and removing said slab from said chamber.

### Summary

Scope of the present invention is to solve the problems of productivity and quality in resining lines of known type slabs of stone material.

Within this scope, an important object of the present invention is to provide for a resining plant for slabs of stone material, which allows to optimize the production times allowing to catalyze the resin of several slabs at the same time.

Another important object of the present invention is to provide for a resining plant of slabs of stone material that allows to obtain a better resining quality of the slabs.

Still an important object of the present invention is to provide for a support for slabs of stone material that allows to optimize the slab resining steps in resining plants.

Not the least object of the present invention, is to devise a resining method for slabs of stone material, which allows to optimize the resining step with respect to methods of known type, in particular in relation to the catalysis times of the resins and their ability to enter deep into the slabs.

These and other objects are achieved by a resining plant according to claim 1.

Suitably, the support chamber is formed, at least in part, by a flexible or floppy portion. Preferably, said flexible or floppy portion covers at least the upper surface of said slab.

Preferably, such flexible portion is adapted to surround the entire slab and is attached to the support.

According to preferred embodiments, the chamber is defined by a floppy or flexible bag within which the vacuum is formed.

In some embodiments, the at least one conduit comprises a connection sleeve to a vacuum system; said sleeve is integral with the frame and is in operational communication with the sealed chamber through a tube; preferably a plurality of such sleeves is present in the support.

Suitably, the face of the slab to be resined is one, and is arranged upwards, with the opposite face resting on the support.

Preferably, between the resining station and the sealing closure station of the vacuum sealed chamber associated with the support, there is an applying station of a protective film on the at least one resined face.

Preferably, between the applying station of the protective film and the sealing closure station for said chamber, a pressure applying station on the film towards the face on which is applied; preferably, the pressure applying station comprises a device for pressure rolling or a spatula pressure device the film against said face of the slab, or an autoclave compartment.

The object of the protective film is substantially to prevent the chamber, mostly when in floppy or flexible form, from coming into contact with the resined face of the slab, becoming dirty.

Autoclave refers to an environment with a much higher pressure than the ambient pressure, for example a pressure of about 3 bar.

Preferably, between the resining station and the applying station of the insulating films, there is an autoclave station for the complex formed by the slabs carried by the supports.

According to preferred embodiments, the plant also comprises a drying station of the slabs upstream of the resining station.

According to the invention, the catalysis oven station comprises a simultaneous housing structure for multiple supports with slabs, wherein such structure is of the multi-floor type, and wherein the supports are arranged one above the other, practically forming a vertical stack, without the slabs touching the supports arranged above them.

Preferably, the catalysis oven station comprises vacuum creating means operably connectable with said the at least one conduit of the support of the slab; practically this at least one conduit is adapted to put into operating communication the interior of the chamber with the vacuum means. Such means include, for example, a pneumatic vacuum plant connectable to said at least one conduit.

Preferably, for supports having sleeves, these serve as support for the respective supports to the oven station.

According to another aspect, the invention, a method for resining stone slabs according to claim 12 is provided.

Preferably, before the step of arrangement within the catalysis oven, a step of arrangement of a film over the resined face of said slab is comprised.

Preferably, after said step of arranging a film over the resined face of said slab, a step of pressing said film against said face is comprised.

Preferably, an autoclave step is present between the resin application step on the slab and the film application step.

According to the invention, prior to the resin application step, there is a slab drying step.

According to the invention, in said catalysis oven, said supports with said closed seal chambers containing said slabs are arranged according to a vertical stack.

Once removed from the chamber, the slab undergoes a protective film removal process.

Preferably, such removal involves lifting the film from the slab, or, provides for surface abrasion of the film.

### Brief description of the drawings

The invention will be better understood by following the description and the accompanying drawings, which illustrate an exemplary and non-limiting embodiment of the invention. More particularly, the drawing shows:

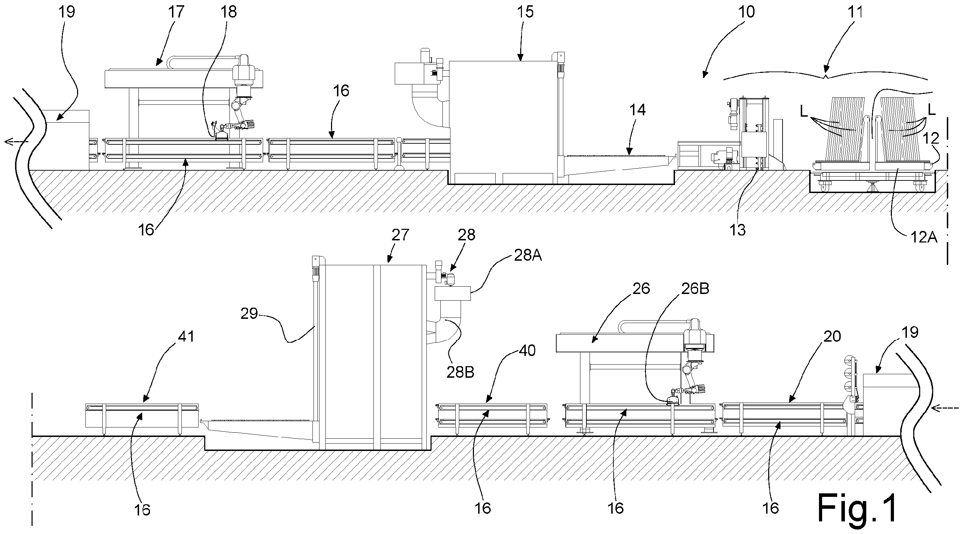

Fig. 1 is a schematic lateral view of a resining plant of slabs of stone material according to the invention;

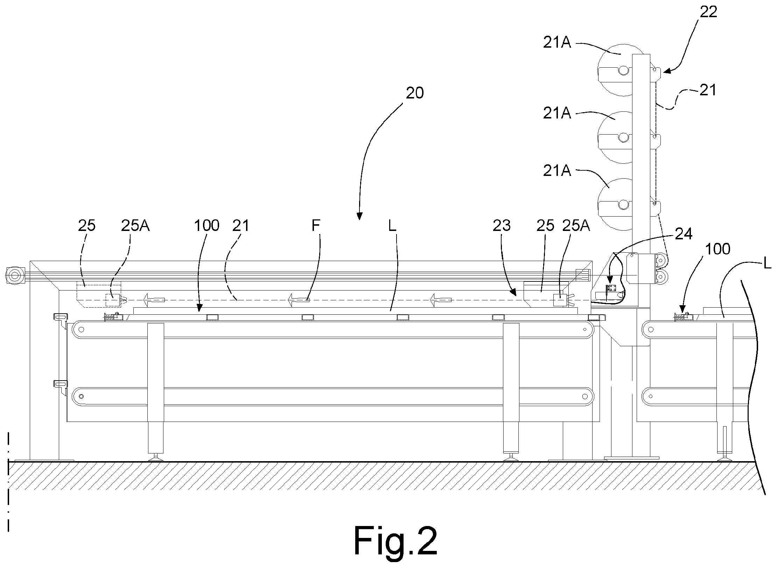

Fig. 2 shows a schematic lateral view of an applying station of a protective film to the resined face of the slab in the plant of Fig. 1;
Fig. 3 is a schematic lateral view of a portion of two slab supports in the catalysis oven of the plant of Fig. 1;
Fig. 4 shows a schematic view of a slab support in the plant of Fig. 1, with the vacuum bag open and its lateral flaps collected laterally to free the upper face of the slab;
Fig. 5 shows a schematic view of the support of Fig. 4, with the vacuum bag open and its lateral flaps turned upwards to close the bag, with the resined slab dashed inside;
Fig. 6 shows a schematic view of the support of Fig. 4, with the vacuum bag closed, with its lateral flaps overlapping on the slab and wrapped together to obtain an airtight closure.

### Detailed description of embodiments

Referring to the aforementioned figures, a resining plant for slabs L of stone material, such as marble, granite and stones, according to the invention, is collectively indicated with 10.

This plant 10 develops substantially along a working line on which a plurality of workstations for the slabs are present.

In particular, each slab L is moved along the line, for the most part, on a support 100, better described later.

In this example, the plant 10 comprises a first station 11 comprising a storage unit 12 for slabs L, *e.g.* formed by a rotating base 12A and a central bearing 12B for the slabs.

Such first station comprises a robot 13, of known type per se, for automatic loading of the slabs from the storage unit 12 and unloading into a station for loading 14 the slabs on respective supports 100.

Each support 100 comprises a support frame 101 of the slab L, defined for example by beams and crossmembers connected to each other, to form a flat support back 101A for the slab.

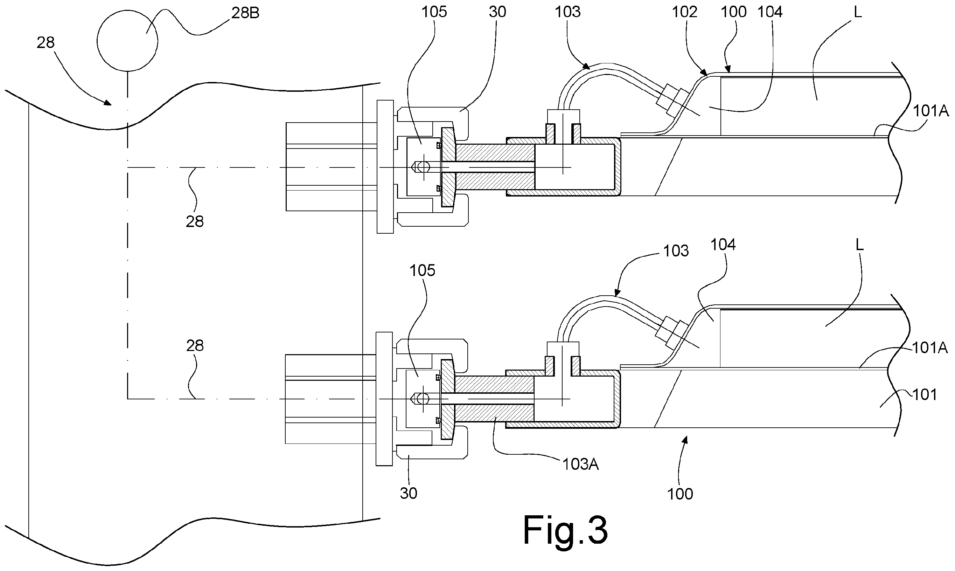

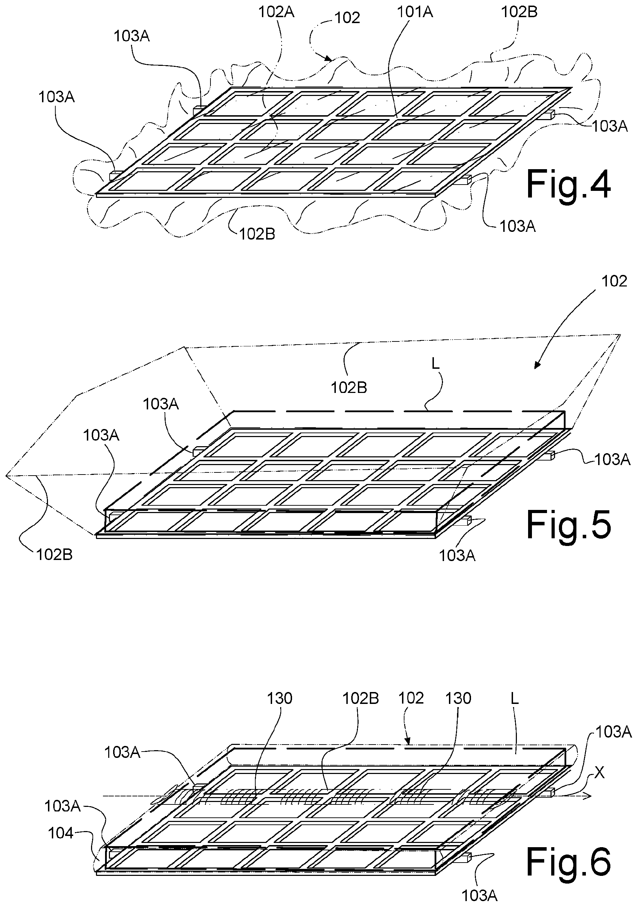

An airtight chamber 102 is attached to the frame 101. This chamber 102 is suitable for surrounding, *i.e.* containing, the slab L, and can be opened and closed, in order to be able to insert and extract the slab. Obviously, when the chamber is closed (Fig. 3 and Fig. 6), it is airtight.

When the chamber 102 is open (Fig. 4), the slab L is accessible, and in particular its upper face L1 is completely free at the top.

There are one or more conduits 103 that put in operating communication the interior 104 of the chamber, where the slab is present, with an area of extraction of air 105, outside the chamber, to allow air to be drawn from the chamber when it is closed, in order to create the vacuum.

From the perimeter edge of the frame 101 appendices in the form of sleeves 103A develop, that allow the connection to a vacuum plant present at the catalysis oven, as better explained below. Each sleeve 103A is in operational communication with the sealed chamber, for example through a tube 103B; sleeve and tube form a said conduit 103. As will be clearer hereinafter, the sleeves 103A may also serve as supports for the respective support within the catalysis oven.

Suitably, said chamber/bag 102 is formed, at least in part, by a flexible or floppy portion. Preferably, such flexible or floppy portion covers at least the upper face L1 of said slab L.

In this example, such flexible portion is adapted to surround the entire slab L and is attached to the support and is practically in the form of a floppy or flexible bag, which is sealed when closed. In Figg. 4, 5 and 6, a schematic view of support with the bag/chamber 102 is shown in the various steps: open bag (Fig. 4), bag in closing step 7 (Fig. 5), closed bag (Fig. 6).

Fig. 4 shows the bag 102 having its own central base portion 102A attached to the back 101A of the frame 101. In this figure, the lateral flaps 102B of the bag/chamber 102 are turned and collected below the level of the upper face L1 of the slab L, which is therefore free and available for resining. Fig. 5 shows the lateral flaps 102B turned upwards, before closing the bag. Fig. 6 shows the bag/chamber 102 with the lateral flaps 102B associated with each other and sealed, such that the interior space of the bag/chamber 102 is airtight.

The loading station 14 (here the slab is placed on the support 100 with the bag/chamber 103 open, as in Fig. 4) is defined as inlet to a drying station 15 of the slab L, such as a real drying oven through which the support 100 with the slab L passes through, freeing it from residual moisture.

Between the various workstations, each support 100 with the respective slab L is placed on moving means along the plant line, such as for example chain moving modules 16 of known type per se, on which the supports 100 are bearing arranged.

Downstream of the drying station 15 a resining station 17 is comprised, of known type per se, such as that described in International Patent Application WO2018073776, wherein an anthropomorphic arm carrying a resin distributor 18, *e.g.* roller, is movable in a resining space defined above a chain moving module 16. When the support 100 with the bag/chamber 102 open and the slab therein with its upper face L1 free at the top, reaches the resining station 17, the distributor 18 distributes epoxy resin on the face L1.

Immediately downstream of the resining station 17, there is an autoclave station 19. The support 100 with open bag 102, containing the slab, enters such autoclave station, where it is subjected to a far higher overpressure that the ambient one, for example equal to about 3 bar.

Immediately downstream of the autoclave station 19, there is a station 20 for applying a protective film 21 (for example, polyethylene) on the resined upper face L1 of the slab L.

The object of the protective film 21 is substantially to prevent the bag 102, when closed, from coming into contact with the resined face L1 of the slab, getting dirty.

For example, such applying station 20 of protective film comprises a storage unit 22 of film 21 wrapped in coil 21A, a spreading device 23 of the film wrapped in coil, and a cutting device 24 of the film from the coil 21A. For example, the spreading device 23 comprises a slider 25 sliding on a guide 23A above the slab, provided with gripper 25A for gripping and releasing a flap of the unwrapped film. The slider drags the film toward (arrow F) the most far end of the slab and releases it on the face L1 of the slab, covering it completely. Once the film is deposited, the cutting device cuts the film from the coil.

The slab L covered by the protective film 21 is moved towards a subsequent pressure applying station 26 on the film 21 towards the face L1 of the slab. For example, such station comprises a roller (or possibly spatula) device similar to that of the resining station, wherein an anthropomorphic arm 26A, carrying a roller device 26B, is moved, pressing towards the slab, on the film 21.

In other embodiments, such station 26 may consist of an autoclave, whereby the pressure is given by the autoclave (*e.g.,* a pressure of about 3 bar) and not by a member directly pushing on the film.

Downstream of the pressure station on the film, there is a bag/chamber (102) closing station 40. Here an operator raises the lateral flaps 102B of the bag and seals them, for example by approaching and bringing them into contact along a main direction X, and then rolling them along such a main direction, and locking them by means of closures 130, creating a complete sealed closure.

At this time, the support 100, with the bag 102 containing the slab L, is placed inside a catalysis oven station 27.

Here, a vacuum plant 28, which includes an aspirator 28A and piping 28B, is operably connected to the conduits 103 of the support 100, and vacuum is made within the bag/chamber 102.

The slab L is thus located at a catalysis temperature of, for example, 35 °C to 50 °C, operated by the catalysis oven, and in vacuum, *i.e.* at negative pressure (*i.e.* at a pressure lower than the ambient pressure of about 1÷10 mbar). Negative pressure allows better penetration of the resin into the slab during catalysis.

The catalysis oven 27 is, in this example, a multi-floor turret, within which the supports with the bags and slabs are arranged vertically stacked one above the other, (without touching). More particularly, the sleeves 103A protruding from the frame 101 of the support 100, are resting on clamps. Such clamps 30 make a sealed operational connection between the sleeves 103A and the vacuum plant piping 28.

Vertical/horizontal movement of the supports 100 in the catalysis oven 27 is accomplished by a mover 29 such as, for example, an automatic elevator capable of vertically moving the supports. After opening the oven at the "i-th" floor, the relative support is introduced by means of a roller transport system or, through the collaboration of a guided mechanical arm installed both on the aforementioned chain elevator (both not indicated in the figures). The oven is provided for each floor with idle bearings that allow the supports to slide and be supported inside the specific oven floor.

Once the timing of the stationing of a specific slab is finished, the support with slab within the closed bag is extracted from the oven and placed in a station 41 for opening the bag, downstream of the oven itself. Here, the bag is opened, the slab taken to another work area and the support with the bag is returned to the beginning of the resining plant line.

To remove the protective film from the resined and catalyzed slab, the slab can be placed in a surface finishing station (not shown in the figures), wherein the film is lifted from the upper face L1 of the slab, or an abrasive device, such as abrasive, lapping, polishing brushes, is passed over the film, with one or more passes, removing the thickness of the film and possibly creating a surface finishing of the slabs.

In this example, the method of resining a slab L of stone material thus provides for removing the slab L, for example from the storage unit 12 and arranging said slab L, with the face to be resined facing upwards, on a support 100 provided with an open bag/chamber 102. Then, the slab L is dried, *e.g*., by bringing the support 100 with the slab into a drying oven 15.

After drying, the slab L is resined on its upper surface, preferably by epoxy resin, for example in the resining station 17. After that, the support 100 with the slab L can be inserted into an autoclave, *i.e.* the slab is subjected to an overpressure with respect to the ambient pressure, to improve the penetration of the resin.

Suitably, a protective film is placed on the resin face of the slab L. Possibly, as a result, pressure is applied on the protective film towards the resin face of the slab.

The bag/chamber 102 of the support 100 is then airtight closed, retaining therein the resined slab with the protective film. This complex is then placed at a controlled temperature (depending on the particular resin mixture used) in a catalysis oven, where the interior of the bag/chamber is placed at negative pressure (approximately 1÷10 mbar), *i.e.* under vacuum. Suitably, multiple supports with multiple slabs may be arranged in the oven according to a vertical stack, preferably with horizontal slabs.

Once the catalysis operation in the oven is completed, the support 100 with the slab is extracted from the oven, the bag/chamber 102 is opened and the slab extracted.

The slab is then further processed, possibly removing the protective film simply by lifting it from the slab, or, for example, passing abrasive devices onto the film, such as abrasive, lapping, polishing brushes, etc., thereby allowing removal of the film and a surface finishing operation of the slab face.

It is understood that the foregoing represents only possible non-limiting embodiments of the invention, which may vary in form and arrangement without departing from the scope of the invention as defined by the claims.

## Claims

1. Resining plant for stone slabs (L) which provides the movement of slab supports (100) comprising, in succession,
- a station (11) for loading the slabs (L) on respective said supports (100),
- a resining station (17), on which a catalyzable resin can be applied on at least one face of a respective slab (L),
- a sealing closure station (19) for a chamber (102) associated with said support (100),
- a catalysis oven station (27) wherein said support (100) is present with said resined slab within the respective chamber (102) sealed and placed under vacuum,
- an unloading station (41) for said slab (L) from said support,
- moving means (16) for said plurality of supports (100) with said slabs (L) through said stations,
said supports (100) comprising each a support frame (101) of the slab, a said sealed chamber (102) associated with said frame (101), which can be opened and closed, suitable for surrounding the slab (L) supported by the frame (101), at least one conduit (103) suitable for putting into operating communication the interior of said chamber (102) with an area of extraction of air from outside said chamber (102), to allow the vacuum to be formed within the chamber (102), wherein said catalysis oven station (27) comprises a simultaneous housing structure for a plurality of said supports (100) bearing said slabs (L), said simultaneous housing structure being of the multi-floor type, wherein the supports (100) are arranged one above the other.

2. Plant according to claim 1, comprising, between said resining station (17) and said sealing closure station (19) for said chamber (102) associated with said support (100), an applying station (20) of a protective film (21) on said at least one resined face.

3. Plant according to claim 2, comprising, between said applying station (20) of a protective film (21) and said sealing closure station (19) for said chamber (102), a pressure applying station (26) on said film (21) towards said face; preferably, said pressure applying station (26) comprises a device for pressure rolling or a pressure spatula device, said film against said face of said slab, or an autoclave compartment.

4. Plant according to claim 2 or 3, comprising, between said resining station (17) and said applying station of a protective film (20), an autoclave station for said slabs on said supports.

5. Plant according to one or more of the preceding claims, comprising a drying station (15) of the slabs upstream of said resining station (17).

6. Plant according to one or more of the preceding claims, wherein said catalysis oven station (27) comprises vacuum creating means (28) operably connectable with said at least one conduit of said support; said at least one conduit being adapted to put into operating communication the interior of said chamber (102) with said vacuum means.

7. Plant according to one or more of the preceding claims, wherein said chamber (102) is formed, at least in part, by a flexible or floppy portion.

8. Plant according to one or more of the preceding claims, wherein said chamber (102) is formed, at least in part, by a flexible or floppy portion which is suitable to cover at least the upper surface of said slab.

9. Plant according to one or more of the preceding claims, wherein said chamber (102) is defined by a floppy or flexible bag within which the vacuum is formed.

10. Plant according to one or more of the preceding claims, wherein said at least one conduit (103) comprises a sleeve (103A) for the connection to a vacuum system, said sleeve being integral with said frame; said sleeve being in communication with said chamber through a tube; preferably a plurality of said sleeves being present.

11. Plant according to claim 10 and according to claim 1 or 7, wherein said at least one sleeve (103A) acts as a support for said support to said oven station.

12. Method for resining stone slabs, comprising the following steps:
- arranging a stone slab (L) on a movable support (100),
- drying said slab,
- applying a catalyzable resin on at least one face of said slab,
- enclosing said slab on said support inside a sealing-type chamber (102), when closed,
- moving said support with said sealed chamber (102) containing said slab towards a catalysis oven (27),
- placing said support with said closed seal chamber (102) containing said slab in said catalysis oven, according to a vertical stack,
- creating the vacuum within said sealed chamber (102),
- catalyzing within said oven said slab within said vacuum chamber (102),
- removing said slab from said chamber (102).

13. Method according to claim 12, comprising, before the step of placing within the catalysis oven (27), a step of arranging a film over the resined face of said slab.

14. Method according to claim 13, wherein, after said step of arranging a film (21) over the resined face of said slab, a step of pressing said film against said face is present.

15. Method according to claim 12 or 13, wherein an autoclave step is present between the resin application step on the slab and the film application step.

## Patentansprüche

1. Verharzungsanlage für Steinplatten (L), die eine Bewegung von Plattenträgern (100) schafft, mit in Folge:
- einer Station (11) zum Laden der Platten (L) auf jeweilige der Träger (100),
- einer Verharzungsstation (17) auf der ein katalysierbares Harz auf mindestens einer Fläche einer jeweiligen Platte (L) aufgebracht werden kann,
- einer Dichtungs-Verschlussstation (19) für eine Kammer (102), die dem Träger (100) zugeordnet ist,
- einer Katalyse-Ofenstation (27), wobei der Träger (100) mit der verharzten Platte innerhalb der jeweiligen Kammer (102) abgedichtet und unter Unterdruck platziert vorhanden ist,
- einer Entladestation (41) für die Platte (L) von dem Träger)
- einer Bewegungseinrichtung (16) für die Anzahl von Trägern (100) mit den Platten (L) durch die Stationen,
wobei die Träger (100) jeweils ein Trägerrahmen (101) der Platten aufweisen, eine der abgedichteten Kammer (102), die dem Rahmen (101) zugeordnet ist, die geöffnet und geschlossen werden kann, die geeignet ist, um die Platte (L), die von dem Rahmen (101) getragen wird, zu umgeben, mindestens eine Leitung (103), die geeignet ist, um in betriebsfähiger Kommunikation mit dem Inneren der Kammer (102) mit einem Bereich der Abziehung von Luft von außerhalb der Kammer (102) zu gelangen, um zu ermöglichen, dass der Unterdruck innerhalb der Kammer (102) gebildet wird, wobei die Katalyse-Ofenstation (27) eine Simultan-Aufnahmestruktur für eine Anzahl der Träger (100), die die Platten (L) tragen, aufweist, wobei die Simultan-Aufnahmestruktur von dem Mehr-Ebenen-Typ ist, wobei die Träger (100) übereinander angeordnet sind.

2. Anlage nach Anspruch 1 mit, zwischen der Verharzungsstation (17) und der Dichtungs-Verschlussstation (19) für die Kammer (102), die dem Träger (100) zugeordnet ist, einer Aufbringungsstation (20) für einen Schutzfilm (21) auf mindestens eine verharzte Fläche.

3. Anlage nach Anspruch 2 mit, zwischen der Aufbringungsstation (20) eines Schutzfilms (21) und der Dichtungs-Verschlussstation für die Kammer (102), einer Druck-Anlegestation (26) auf den Film (21) zu der Fläche, wobei vorzugsweise die Druck-Anlegestation (26) eine Vorrichtung zum Presserollen oder eine Druck-Spachtelvorrichtung für den Film gegen die Flächen der Platte oder eine Autoklavenkammer aufweist.

4. Anlage nach Anspruch 2 oder 3 mit, zwischen der Verharzungsstation (17) und der Aufbringungsstation eines Schutzfilms 20) eine Autoklavenstation für die Platten auf den Trägern aufweist.

5. Anlage nach einem oder mehreren der vorstehenden Ansprüche mit einer Trockenstation (15) für die Platten stromauf der Verharzungsstation (17).

6. Anlage nach einem der vorstehenden Ansprüche, wobei die Katalyse-Ofenstation (27) eine Unterdruck-Erzeugungseinrichtung (28) aufweist, die betriebsmäßig mit mindestens einer Leitung des Trägers verbunden ist, wobei die mindestens eine Leitung ausgebildet ist, um das Innere der Kammer (102) mit der Unterdruck-Einrichtung in betriebsmäßiger Kommunikation zu verbinden.

7. Anlage nach einem oder mehreren der vorstehenden Ansprüche, wobei die Kammer (102) mindestens teilweise durch einen flexiblen oder nachgiebigen Abschnitt gebildet ist.

8. Anlage nach einem oder mehreren der vorstehenden Ansprüche, wobei die Kammer (102) mindestens teilweise durch einen flexiblen oder nachgiebigen Abschnitt gebildet ist, der ausgebildet ist, um mindestens die obere Fläche der Platte abzudecken.

9. Anlage nach einem oder mehreren der vorstehenden Ansprüche, wobei die Kammer (102) durch eine nachgiebige oder flexible Tasche gebildet ist, innerhalb derer der Unterdruck ausgebildet wird.

10. Anlage nach einem oder mehreren der vorstehenden Ansprüche, wobei mindestens eine Leitung (103) eine Hülse (103A) für die Verbindung zu einem Unterdrucksystem aufweist, wobei die Hülse einstückig mit dem Rahmen ist, wobei die Hülse in Kommunikation mit der Kammer durch ein Rohr steht, wobei vorzugsweise eine Anzahl der Hülsen vorhanden ist.

11. Anlage nach Anspruch 10 und nach den Ansprüchen 1 bis 7, wobei die mindestens eine Hülse (103A) als eine Unterstützung für den Träger zu der Ofenstation wirkt.

12. Verfahren zur Verharzung von Steinplatten mit den folgenden Schritten:
- Anordnen einer Steinplatte (L) auf einem bewegbaren Träger (100),
- Trocknen der Platte,
- Aufbringen eines katalysierbaren Harzes auf mindestens einer Fläche der Platte,
- Einschließen der Platte auf dem Träger innerhalb einer Kammer (102) vom Dichtungstyp, wenn sie geschlossen ist,
- Bewegen des Trägers, wobei die abgedichtet Kammer (102) die Platte enthält, zu einem Katalysatorofen (27),
- Platzieren des Trägers, wobei die, wobei die geschlossene Dichtungskammer (102) die Platte enthält, in dem Katalysatorofen entsprechend einer vertikalen Stapelung,
- Erzeugen des Unterdrucks innerhalb der abgedichteten Kammer (102),
- Katalysieren der Platte innerhalb des Ofens in der Unterdruckkammer (102),
- Entfernen der Platte aus der Kammer (102).

13. Verfahren nach Anspruch 12 mit, vor dem Schritt der Platzierung innerhalb des Katalysatorofens (27), einem Schritt der Anordnung eines Films über der verharzten Fläche der Platte.

14. Verfahren nach Anspruch 13, wobei, nach dem Schritt der Anordnung des Films (21) über der verharzten Fläche der Platte, ein Schritt des Pressens des Films gegen die Fläche vorhanden ist.

15. Verfahren nach Anspruch 12 oder 13, wobei ein Autoklavenschritt zwischen dem Schritt der Aufbringung des Harzes auf die Platte und dem Schritt der Aufbringung des Films vorhanden ist.

## Revendications

1. Usine d'application de résine sur des dalles à base de pierre (L) qui prévoit le mouvement de supports de dalle (100), comprenant, en succession,
- une station (11) pour charger les dalles (L) sur des supports respectifs (100),
- une station d'application de résine (17), sur laquelle une résine pouvant être catalysée peut être appliquée sur au moins une face d'une dalle respective (L),
- une station de fermeture étanche (19) pour une chambre (102) associée audit support (100),
- une station à four de catalyse (27) dans laquelle ledit support (100) est présent avec ladite dalle couverte de résine à l'intérieur de la chambre respective (102) étanche et placée sous vide,
- une station de déchargement (41) de ladite dalle (L) dudit support,
- des moyens de déplacement (16) pour ladite pluralité de supports (100) avec lesdites dalles (L) à travers lesdites stations,
lesdits supports (100) comprenant chacun un cadre support (101) de la dalle, l'une desdites chambres étanches (102) associées avec ledit cadre (101), qui peut être ouverte et fermée, apte à entourer la dalle (L) supportée par le cadre (101), au moins un conduit (103) apte à mettre en communication fonctionnelle l'intérieur de ladite chambre (102), pour permettre la création de vide à l'intérieur de la chambre (102), dans laquelle ladite station à four de catalyse (27) comprend une structure de logement simultané pour une pluralité desdits supports (100) portant lesdites dalles (L), ladite structure de logement simultané étant du type à multiples étages, dans laquelle les supports (100) sont agencés les uns au-dessus des autres.

2. Usine selon la revendication 1, comprenant, entre ladite station d'application de résine (17) et ladite station de fermeture étanche (19) pour ladite chambre (102) associée audit support (100), une station d'application (20) d'un film protecteur (21) sur ladite ou lesdites face(s) couverte(s) de résine.

3. Usine selon la revendication 2, comprenant, entre ladite station d'application (20) d'un film protecteur (21) et ladite station de fermeture étanche (19) pour ladite chambre (102), une station d'application de pression (26) sur ledit film (21) vers ladite face ; de préférence, ladite station d'application de pression (26) comprend un dispositif à rouleau presseur ou un dispositif à spatule presseuse, ledit film contre ladite face de ladite dalle, ou un compartiment formant autoclave.

4. Usine selon la revendication 2 ou 3, comprenant, entre ladite station d'applicationde résine (17) et ladite station d'application d'un film protecteur (20), une station à autoclave pour lesdites dalles sur lesdits supports.

5. Usine selon l'une ou plusieurs des revendications précédentes, comprenant une station de séchage (15) des dalles en amont de ladite station d'application de résine (17).

6. Usine selon l'une ou plusieurs des revendications précédentes, dans laquelle ladite station à four de catalyse (27) comprend des moyens de création de vide (28) connectables de façon opérationnelle avec ledit ou lesdits conduit(s) dudit support ; ledit ou lesdits conduit(s) étant apte(s) à mettre en communication fonctionnelle l'intérieur de ladite chambre (102) avec lesdits moyens de création de vide.

7. Usine selon l'une ou plusieurs des revendications précédentes, dans laquelle ladite chambre (102) est formée, au moins en partie, par une partie flexible ou souple.

8. Usine selon l'une ou plusieurs des revendications précédentes, dans laquelle ladite chambre (102) est formée, au moins en partie, par une partie flexible ou souple qui est apte à couvrir au moins la surface supérieure de ladite dalle.

9. Usine selon l'une ou plusieurs des revendications précédentes, dans laquelle ladite chambre (102) est formée par un sac souple ou flexible dans lequel le vide est créé.

10. Usine selon l'une ou plusieurs des revendications précédentes, dans laquelle ledit ou lesdits conduit(s) (103) compren/d/nent un manchon (103A) pour la connexion à un système de création de vide, ledit manchon étant solidaire dudit cadre ; ledit manchon étant en communication avec ladite chambre par l'intermédiaire d'un tube ; de préférence une pluralité desdits manchons étant présente.

11. Usine selon la revendication 10 et selon la revendication 1 ou 7, dans laquelle ledit ou lesdits manchons (103A) agi(ssen)t comme un soutien pour ledit support dans ladite station à four.

12. Procédé d'application de résine sur des dalles à base de pierre, comprenant les étapes suivantes :
- disposer une dalle à base de pierre (L) sur un support mobile (100),
- sécher ladite dalle,
- appliquer une résine pouvant être catalysée sur au moins une face de ladite dalle,
- enfermer ladite dalle sur ledit support à l'intérieur d'un chambre du type étanche (102), lorsqu'elle est fermée ;
- déplacer ledit support avec ladite chambre étanche (102) contenant ladite dalle vers un four de catalyse (27),
- placer ledit support avec ladite chambre étanche fermée (102) contenant ladite dalle dans ledit four de catalyse, en formant une pile verticale,
- créer du vide à l'intérieur de la chambre étanche (102),
- catalyser dans ledit four ladite dalle à l'intérieur de ladite chambre sous vide (102),
- retirer ladite dalle de ladite chambre (102).

13. Procédé selon la revendication 12, comprenant, avant l'étape de placement dans le four de catalyse (27), une étape de mise d'un film sur la face couverte de résine de ladite dalle.

14. Procédé selon la revendication 13, dans lequel, après l'état de mise d'un film (21) sur la face couverte de résine de ladite dalle, une étape de pressage dudit film contre ladite face a lieu.

15. Procédé selon la revendication 12 ou 13, dans lequel une étape de placement dans un autoclave a lieu entre l'étape d'application de résine sur la dalle et l'étape d'application d'un film.
